# EUROPEAN PATENT SPECIFICATION

(11) **EP 4 212 848 B1**
(45) Date of publication and mention of the grant of the patent: **01.01.2025**
(21) Application number: 22151594.3
(22) Date of filing: 14.01.2022
(51) Int. Cl.: G01N 9/24

(54) **SNOW DENSITY MEASUREMENT INSTRUMENT**
SCHNEEDICHTEMESSGERÄT
INSTRUMENT DE MESURE DE DENSITÉ DE NEIGE

(43) Date of publication of application: 19.07.2023
(73) Proprietor: Eidg. Forschungsanstalt für Wald, Schnee und Landschaft WSL, 8903 Birmensdorf (CH)
(72) Inventor: Walter, Benjamin, 7270 Davos Platz (CH); Schneebeli, Martin, 7270 Davos Platz (CH); Löwe, Henning, 7270 Davos Platz (CH); Mewes, Lars, 8903 Birmensdorf (CH)
(74) Representative: Prins Intellectual Property AG

(56) References cited:
- WO-A1-2021/106945
- CH-B1- 698 701
- JP-B2- 5 462 098
- US-A1- 2020 340 914
- MATZL MARGRET ET AL: "Measuring specific surface area of snow by near-infrared photography", JOURNAL OF GLACIOLOGY, vol. 52, no. 179, 1 January 2006 (2006-01-01), GB, pages 558 - 564, XP055932403, ISSN: 0022-1430, DOI: 10.3189/172756506781828412
- EL OUFIR MOHAMED KARIM ET AL: "Estimating Snowpack Density from Near-Infrared Spectral Reflectance Using a Hybrid Model", REMOTE SENSING, vol. 13, no. 20, 13 October 2021 (2021-10-13), pages 4089, XP055932412, DOI: 10.3390/rs13204089
- GERGELY M ET AL: "First experiments to determine snow density from diffuse near-infrared transmittance", COLD REGIONS SCIENCE AND TECHNOLOGY, ELSEVIER, AMSTERDAM, NL, vol. 64, no. 2, 1 November 2010 (2010-11-01), pages 81 - 86, XP027417403, ISSN: 0165-232X, [retrieved on 20100630]
- MARTIN HUG ET AL: "Optische Messung der Schneekorngr sse", INTERNET CITATION, 1 December 2006 (2006-12-01), XP002447934, Retrieved from the Internet <URL:http://www.ntb.ch/files/0/2787/2006_Abstract_SLF.pdf>

## Description

### TECHNICAL FIELD

The present invention describes a snow density measurement instrument according to claim 1 and a method for measuring snow densities according to claim 9.

### STATE OF THE ART

Snow is a natural or man-made porous medium consisting of ice, air, and at 0°C, water. The ice matrix forms a continuous connected structure defining its physical properties. The basic physical properties describing this porous medium is the content of air and ice per volume, expressed as specific density or porosity, and the size of the connected ice structures, expressed as specific surface area.

The specific surface area of ice, expressed also as optical equivalent diameter (OED) of porous ices and its specific density in porous ice structures are the dominating parameters determining many physical properties of snow.

The current field methods to determine the specific density are by gravimetry, by measuring the weight of a known volume of snow and indirectly by measuring its dielectric properties and neutron probe experiments. In the laboratory, density can be measured X-ray tomography. These methods have different shortcomings.

Gravimetry requires the extraction of a known volume. The precision of this method is shown to be precise at best to about ±5%. An important limitation is that the layers of the natural snowpack are often thinner than the minimal mechanically possible dimension of 2-3 cm. However, these layers are often important for the mechanical, physical and chemical properties of the snowpack. According to Proksch, M., Rutter, N., Fierz, C., & Schneebeli, M. (2016). Intercomparison of snow density measurements: bias, precision and spatial resolution. The Cryosphere, 10, 371-384, and Conger, S. M., & Mcclung, D. M. (2009). Instruments and Methods Comparison of density cutters for snow profile observations. J. Glaciology, 55(189), 163-169.

Dielectric measurements at different electromagnetic frequencies (often at 20-50 MHz, or around 1 GHz) are based on the frequency dependent adsorption of electromagnetic radiation. As with the gravimetric samples, spatial resolution is limited by the size of the antenna. In addition, the insertion of the antenna compacts the snow. The evaluation of the measurement has to take into account the geometrical shape of the ice structure, for example discussed in Denoth, A. (1989). Snow dielectric measurements. Advances in Space Research, 9(1), 233-243. https://doi.org/10.1016/0273-1177(89)90491-2 and Mätzler, C. (1996). Microwave permittivity of dry snow. IEEE Transactions on Geoscience and Remote Sensing, 34(2), 573-581. https://doi.org/10.1109/36.485133.

Micro- X-ray computed tomography (micro-CT) resolves the internal ice and air structures with a resolution of 10-40 micrometers. This is sufficient to measure density changes with mm-resolution. The measurements require the extraction of snow samples, transport in a cold laboratory, and analysis in a micro-CT.

The specific surface area of snow can be measured by different direct and indirect methods. With the exception of the near-infrared photography and micro-CT, these methods are point measurements.

A wide range of optical methods exist for OED retrievals, whereas only one in-situ optical method based on near-infrared transmittance measurements exists for snow density retrievals in the field.

US 2020/340914 A1 discloses the preamble of claim 1.

Because there are still debates about the magnitude of future climate warming, it is essential to better understand climate change where the impacts are strongest: Arctic, Antarctic and alpine regions. For evaluating a climate change induced snow cover variability in these regions, it is important to have accurate, high-resolution, low-cost and user-friendly field measurement systems that allow for a comprehensive monitoring of the most important parameters of a snow cover, the snow density and the optical equivalent diameter.

The drawback of the optical transmittance measurement methods is that a fragile thin snowpack wall has to be prepared and the entire snow pit has to be sheltered from natural surrounding radiation. Even though many density retrieval tools exist, none of them allows for a fast, spatially highly resolved in-situ determination of the snow density in the field at a reasonable cost.

### DESCRIPTION OF THE INVENTION

The object of the present invention is to create a snow density measurement device for non-invasive measurements with improved resolution, easy to use by avoiding tedious preparation work before measurements. Also an improved method for measuring snow densities is achieved.

This invention solves some inherent problems of the known methods to measure density. First, the vertical spatial resolution of the proposed method results in a continuous density measurement with a resolution of better than 10 mm. The spatial resolution compared to gravimetry measurements improves 5-10-fold. Second, the vertical image allows immediate quantification of the spatial variability. Multiple measurements across the imaged size allow to quantify spatial variability. Wherein no time-consuming preparatory work needs to be done on the snow before the measurements.

Vertical resolution is in the mm-range, the spatial coverage of approx. 0.5 m x 0.5 m is sufficient to detect many stratigraphic features (wind deposition, weak layers, melt crusts, infiltration channels), is independent of observer bias, is applicable to hard-to-sample fragile snow types (new snow, depth hoar) and measures two essential properties with one instrument.

### BRIEF DESCRIPTION OF THE DRAWINGS

Further understanding of various aspects of the invention can be obtained by reference to the following detailed description in conjunction with the associated drawings, which are described briefly below.

It should be noted that in the differently described embodiments, the same parts are provided with the same reference symbols or the same component names, the disclosures contained in the entire description being able to be applied analogously to the same parts with the same reference symbols or the same component symbols.

A preferred exemplary embodiment of the subject matter of the invention is described below in conjunction with the attached drawings.
- Figure 1: shows a schematic view of a box-shaped snow density measurement instrument and a typical snow side with given ice particles, pore spaces and resulting ice particle density.
- Figure 2: shows a schematic representation of the reflectivity r in the aperture of the instrument coverplate without coverplate, measured with a setup according figure 1.
- Figure 3a: shows a schematic front view of a instrument coverplate with multiplicity of slits with different slit widths from the side of the cover facing away from the snow, while
- Figure 3b: shows the horizontal reflectivity variation over the slit for different slit widths averaged over a snow profile for three different slit widths.

### DESCRIPTION

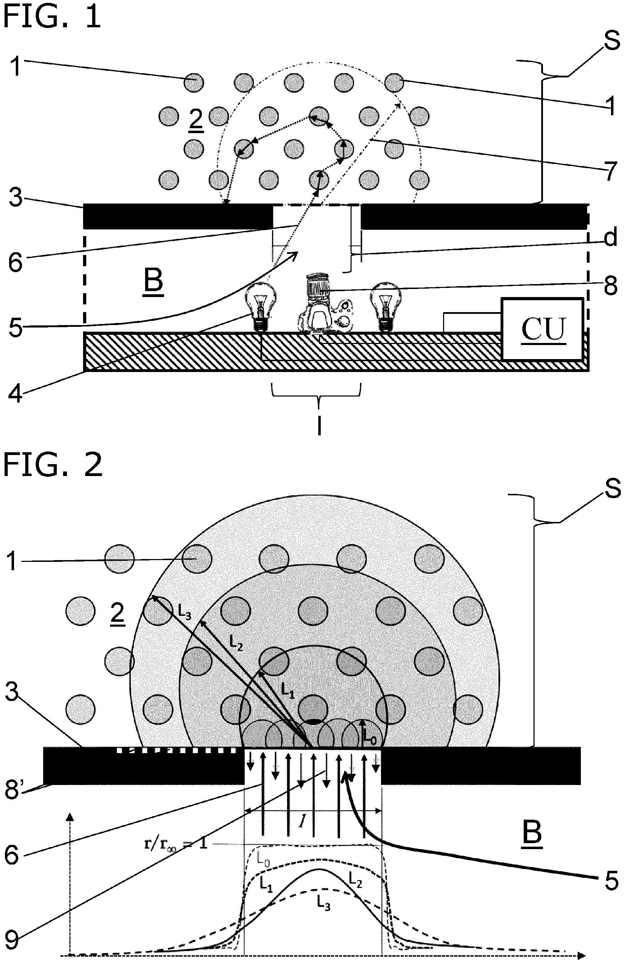

A snow density measurement instrument B, comprising at least one illumination device 4, at least one light detector 8, a controlling computational unit CU is shown in figure 1. The snow density measurement instrument B is box-shaped and comprises an instrument coverplate 3, which can cover an interior of the new density measurement instrument B. In the instrument coverplate 3 at least one aperture 5 or slit 5 is left out, which is used to measure snow density of a snow side S non-invasively by taking a digital image in the near-infrared electromagnetic spectrum. Such box-shaped instrument B can use one or several digital cameras 8, 8' as detectors, to take images of the snow surface, with and without the instrument coverplate 3 or apertures/slits 5.

Here, the controlling computational unit CU, at least one illumination device 4 and light detector 8 are located in the interior of the box-shaped snow density measurement instrument B, facing in direction of the snow side S, while covered by the box. The snow side S comprises ice particles 1 and pore spaces 2 between the ice particles 1, which are deflecting an incident radiation 6, which was radiated from inside the box-shaped snow density measurement instrument B, with a defined distance d between detector 8 and slit 5 surface, through the at least one slit 5 with a given slit width I. For stability reasons the illumination device 4, preferred at least one near-infrared light source and the at least one detector 8 are connected to a base plate of the box-shaped snow density measurement instrument B.

Due to the density of the snow and its grain size 1, slit width I, wavelength of the incident beam 6, a penetration depth 7 is resulting and a reflected radiation and reflected radiation distribution can be measured. The penetration depth 7 defines the degree of lateral propagation of the radiation on the snow side S. The reflected radiation over the slit 5 or more general the aperture 5, is measured with the at least one optical detector 8.

The method presented here extends the method for optical determining the OED by the instrument coverplate 3, with the at least one aperture 5 or the multiplicity of local slits or apertures 5, through which a density dependence of the reflection in the apertures/slits 5 is induced: On a free, uncovered snow surface the diffuse reflectance in the near infrared depends only on the ratio of scattering and absorption coefficients of snow, which, by inversion, only determines the OED. The invention exploits the independent influences of absorption and scattering if the diffuse reflectance is measured over apertures (illumination and detection areas) of varying sizes 5 on an otherwise covered surface. This, by inversion, allows to estimate OED and density simultaneously.

The box-shaped snow density measurement instrument B is to be designed to measure snow surfaces with an area between 0.1 m² to 1m². Therefore the whole box B respectively the area of the instrument coverplate 3 should be coordinated with it. The instrument coverplate 3 should be formend between 0.25 m² to 1m², depending on the application in the field, rather square or rectangular, larger or smaller depending on the snow cover. The snow cover in the taiga / tundra is often only 0.5 m high, in oceanic areas several metres high.

The shape of the apertures 5 in the instrument coverplate 3 is slit-like, wherein the slits 5 preferably running with constant slit width I along more than half of the width of the instrument coverplate 3. Due to the different types of snow, the lower limit of a reasonable slit width I is approx. 0.5 cm, the upper limit approx. 5 cm. The slit 5 opening is rectangular, running perpendicular to the general layering of the snow cover. In principle, the aperture could also be round, e.g. for application on ski slopes.

A snow side S respectively the surface of the snow side S is first imaged in near-infrared, then partially covered with the at least one aperture 5 in the instrument coverplate 3 and again illuminated and imaged. The change in reflectance determines the snow density. The specific surface area of the snow is determined via the homogenous scattering and adsorption of light. The density of snow can be determined by combining the known specific surface area with the reflection of a partially covered surface. The scattering is almost independent of the wavelength, while the absorption is strongly dependent on wavelength.

A wavelength range between about 800 - 1500 nm, near-infrared, is optimal for the application due to the following reasons:
a) The naturally occurring variation in specific surface area causes at the wavelength of near-infrared a measurable change in reflected light. b) The reflected light is measured with standard detectors 8, 8' equipped with a silicon CCD- or CMOS-sensor or, in implementations not falling under the scope of the appended claims, InGAS CCD- or CMOS-sensor.
c) The influence of common impurities in snow (dust, black carbon) on the reflected light is small.
d) The bias caused by artificially created small ice particles from the opening of the snow profile is minimized.

At 1300 nm, the change in reflectivity is greater (better signal-to-noise ratio), but since small particles are produced during the preparation of the profile (snow dust), the reflectivity is often distorted. For surface applications (slopes), this spectral range could be interesting at best. Figure 2 shows a schematic representation of the ratio r /r∞ of the local reflection r, with instrument coverplate 3, relative to the reflection r∞, without coverplate 3, across the opening as a function of the penetration depth L. The penetration depth L is depending on both the size of the ice grains (OED) and the density of the porous ice structure. For very high densities (low penetration depth L0, Fig. 2), the lateral dispersion of the radiation is very limited, with the result that the reflection within the opening is identical to that without the coverplate 3 (r/r∞ = 1). With decreasing density (increasing penetration depth at identical OED, L1 to L3 in Fig. 2,) the lateral dispersion of the radiation increases and thus the reflected radiation within the apertures 5 decreases (r /r∞ < 1). From the reflectance distribution across the apertures 5 together with the knowledge of the OED, the density of the porous ice structure can be inferred.

As depicted in figure 2, additional detectors 8' are placed in recesses in the instrument coverplate 3 and also such detectors 8' are connected to the computational unit CU. The detectors 8' are facing the snow side S and can detect reflected radiation. The distribution of the back reflected radiation at detectors 8', on the snow facing side of the coverplate 3, can be detected and evaluated.

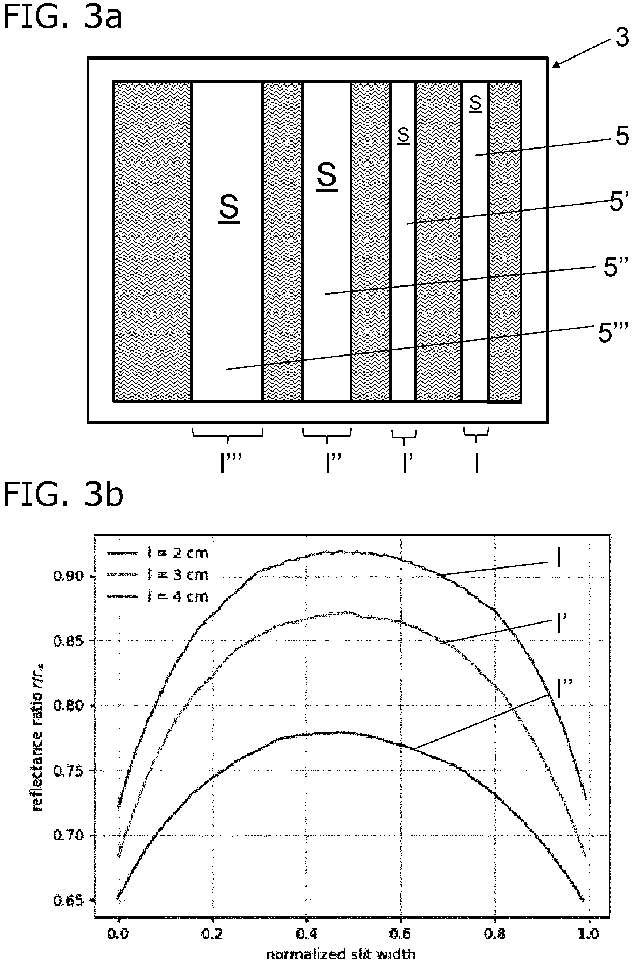

A series of preliminary experiments was performed using a grid with vertical slits 5 as apertures 5 to test the proposed method, as depicted in figure 3a. In figure 3a a schematics of an instrument coverplate 3 with four slits 5, 5', 5", 5‴ with different slit widths I, I', I", I‴ is shown. Essentially, the instrument coverplate 3 represents a frame with four vertical slits 5, 5', 5", 5‴, through which the snow side S can be seen, when lying on a snow area.

The number of vertical slits 5, 5', 5", 5‴ is chosen so that they do not interfere with each other, i.e. at least about twice the slit width I, I', I", I‴. The adjacent slits 5, 5', 5", 5‴ can all be the same width, or they can be in a regular pattern (e.g. 1 cm, 2 cm, 3 cm). All slits 5, 5', 5", 5'" are running parallel to each other. The length of the slits 5, 5', 5", 5'" runs over more than half of the length of the instrument coverplate 3, here about 90% of the length of the instrument coverplate 3.

The reflectance without the coverplate 3 depends only on the grain size or OED of the ice grains, though the reflectance within the slits 5, 5', 5", 5'" depends additionally on the snow density.

Figure 3b shows the dependency of the normalized reflectance r /r∞ across three slits 5, 5', 5" of different slit width I, I', I". The narrower the slit 5, the stronger the effect of the coverplate 3 and thus the reduction of the local reflectance at similar penetration depth L. Furthermore, the symmetric decrease in r /r∞ towards both sides of the slit 5, 5', 5" is shown.

The box-shaped snow density measurement instrument B can be used in a surface mode and in a vertical mode. The surface mode works by placing the box on the snow surface. The vertical mode works on the wall of the snow profile.

The digital images taken are transferred to the computational unit CU and optionally to another computer or similar device, e.g. mobile phone. The images are evaluated by a software and converted to density profiles.

The measured snow surface is illuminated by artificial light in the spectral range of 800-1000 nm. Additional spectra can be added (e.g. green light) to measure the amount of snow impurities.

External light sources on the images are eliminated by taking a dark image at the beginning and end of an imaging sequence.

Larger areas of snow on a flat or vertical surface than covered by the box-shaped snow density measurement instrument B are combined by making a mosaic of images and digitally combining them into one density and specific surface area result.

The instrument coverplate 3 can be easily interchangeable and/or movably arranged on the box-shaped snow density measurement instrument B, for a quick exchange or replacement.

The electronic components like illumination device 4 and detectors 8, 8' are electrically connected, preferably wireless connected to the computational unit CU.

### LIST OF REFERENCE NUMERALS

B box-shaped snow density measurement instrument
S snow side
CU computational unit
1 ice particle/snow and its grain size
2 pore space
3 instrument coverplate
30 snow facing side of the cover
4 illumination device (at least one)
5 slit (in coverplate) / (aperture more general)
I slit width
6 incident radiation
7 Penetration depth (L0, L1, L2, L3)
8 detector (at least one, suitable for incident beam)
d distance detector to aperature surface, aligned with outer coverplate surface
8' detectors in instrument coverplate facing snow (can be optional or replacing detectors 8)
9 reflected radiation reflectance ratio r/r∞

## Claims

1. Snow density measurement instrument (B), comprising at least one illumination device (4) generating an incident beam (6), at least one light detector (8) based on silicon CCD- or CMOS-sensors measuring the reflected light and a controlling computational unit (CU), wherein the snow density measurement instrument (B) is formed box-shaped, the at least one illumination device (4) and the at least one light detector (8) are connected to a base plate of the box-shaped snow density measurement instrument (B) and arranged in the interior of the snow density measurement instrument (B), which is covered with an instrument coverplate (3) facing a snow side (S) and covering the box-shaped snow density measurement instrument (B), while from ice particles (1) reflected radiation can be measured in the at least one light detector (8) with digital images controlled and processed by the controlling computational unit (CU) in the interior of the snow density measurement instrument (B) in a non-invasively way, wherein the digital images are evaluated by a software and converted to density profiles, **characterized in that**
a multiplicity of apertures (5) in the form of slits, in particular running parallel to each other, are left out in the instrument coverplate (3), the slits having different slit widths (I) , allowing passage of incident near-infrared radiation (6) radiated by the at least one illumination device (4) in a wavelength range between 800nm and 1500nm through the multiplicity of apertures (5) to the snow side (S).

2. Snow density measurement instrument (B) according to claim 1, wherein the multiplicity of apertures (5) have rectangular cross-sectional areas with slit widths (I) between 0.5 cm and 5 cm.

3. Snow density measurement instrument (B) according to claim 2, wherein neighbouring slits (5, 5', 5", 5"') do not interfere with each other with distances of at least about twice the slit width (I, I', I", I‴) of each other.

4. Snow density measurement instrument (B) according to one of the preceding claims, wherein the multiplicity of apertures (5) run over more than half of the length of the instrument coverplate (3), in particular over about 90% of the length of the instrument coverplate (3).

5. Snow density measurement instrument (B) according to one of the preceding claims, wherein additional detectors (8') are placed in recesses in the instrument coverplate (3), facing the snow side (S) and electrically connected, preferably also wireless or by wiring to the computational unit (CU).

6. Snow density measurement instrument (B) according to one of the preceding claims, wherein a multiplicity of illumination devices (4) and a multiplicity of detectors (8) are fixed in the interior of the snow density measurement instrument (B) at the base plate, within a fixed distance (d) between the detectors (8) and the surfaces of the multiplicity of apertures (5).

7. Snow density measurement instrument (B) according to one of the preceding claims, wherein the box-shaped snow density measurement instrument (B) respectively the instrument coverplate (3) is designed with a total cross-sectional area between 0.1 m² to 1m².

8. Snow density measurement instrument (B) according to one of the preceding claims, wherein the instrument coverplate (3) is movable and/or interchangeable mounted at the box-shaped snow density measurement instrument (B).

9. Method for measuring snow densities with near-infrared radiation and a snow density measurement instrument (B) according to one of the preceding claims,
**comprising the steps of:**
- placing at least partly open box-shaped snow density measurement instrument (B) on the surface of a snow area
- imaging the surface by illumination with near-infrared radiation by the at least one illumination device (4) and recording of digital images by the at least one detector (8) controlled by the computational unit (CU),
- partly covering the box-shaped snow density measurement instrument (B) with its instrument coverplate (3) with the multiplicity of apertures (5) left out and subsequent
- imaging of the same surface of snow side (S) through the apertures (5) in the instrument coverplate (3) and recording of digital images by the at least one detector (8) controlled by the computational unit (CU) and later
- evaluation by a software and conversion to snow density profiles determined by combining the known specific surface area with the reflection of a partially shaded surface.

10. Method for measuring snow densities according to claim 9, wherein a dark digital image will be taken before and after each imaging sequence for elimination of interfering external light sources.

## Patentansprüche

1. Schneedichtemessgerät (B), umfassend mindestens eine Beleuchtungseinrichtung (4), die einen einfallenden Strahl (6) erzeugt, mindestens einen Lichtdetektor (8), aufgebaut auf Silizium-CCD- oder CMOS-Sensoren, der das reflektierte Licht misst, und eine steuernde Recheneinheit (CU), wobei das Schneedichtemessgerät (B) kastenförmig ausgebildet ist, die mindestens eine Beleuchtungseinrichtung (4) und der mindestens eine Lichtdetektor (8) verbunden mit einer Grundplatte des kastenförmigen Schneedichtemessgeräts (B) und im Inneren des Schneedichtemessgeräts (B) angeordnet, die mit einer einer einer Schneeseite (S) zugewandten Instrumentenabdeckplatte (3) bedeckt ist und das kastenförmige Schneedichtemessgerät (B) abdeckt, während von Eispartikeln (1) reflektierte Strahlung in dem mindestens einen Lichtdetektor (8) mit digitalen Bildern gemessen und von dem Steuergerät gesteuert und verarbeitet werden kann Recheneinheit (CU) im Inneren des Schneedichtemessgerätes (B) in nicht-invasiver Weise, wobei die digitalen Bilder durch eine Software ausgewertet und in Dichteprofile umgewandelt werden,
**dadurch gekennzeichnet, dass**
eine Vielzahl von Öffnungen (5) in Form von Schlitzen, die insbesondere parallel zueinander verlaufen, in der Instrumentenabdeckplatte (3) ausgelassen sind, die Schlitze weisen unterschiedliche Spaltbreiten (I) auf, die den Durchgang von einfallender Nahinfrarotstrahlung (6), die von der mindestens einen Beleuchtungseinrichtung (4) in einem Wellenlängenbereich zwischen 800 nm und 1500 nm abgestrahlt wird, durch die Vielzahl von Öffnungen (5) zur Schneeseite (S) ermöglichen.

2. Schneedichtemessgerät (B) nach Anspruch 1, wobei die Vielzahl der Öffnungen (5) rechteckige Querschnittsflächen mit Schlitzbreiten (I) zwischen 0,5 cm und 5 cm aufweist.

3. Schneedichtemessgerät (B) nach Anspruch 2, wobei benachbarte Schlitze (5, 5", 5", 5‴) in Abständen von mindestens etwa der doppelten Schlitzbreite (I, I', I", I‴) zueinander nicht miteinander kollidieren.

4. Schneedichtemessgerät (B) nach einem der vorhergehenden Ansprüche, wobei die Vielzahl der Öffnungen (5) über mehr als die Hälfte der Länge der Instrumentenabdeckplatte (3), insbesondere über etwa 90 % der Länge der Instrumentenabdeckplatte (3), verläuft.

5. Schneedichtemessgerät (B) nach einem der vorhergehenden Ansprüche, wobei zusätzliche Detektoren (8') in Aussparungen in der Instrumentenabdeckplatte (3), der Schneeseite (S) zugewandt, angeordnet und elektrisch, vorzugsweise auch drahtlos oder durch Verdrahtung mit der Recheneinheit (CU) verbunden sind.

6. Schneedichtemessgerät (B) nach einem der vorhergehenden Ansprüche, wobei eine Vielzahl von Beleuchtungseinrichtungen (4) und eine Vielzahl von Detektoren (8) im Inneren des Schneedichtemessgerätes (B) an der Grundplatte, innerhalb eines festen Abstands (d) zwischen den Detektoren (8) und den Oberflächen der Vielzahl von Öffnungen (5) befestigt sind.

7. Schneedichtemessgerät (B) nach einem der vorhergehenden Ansprüche, wobei das kastenförmige Schneedichtemessgerät (B) bzw. die Instrumentenabdeckplatte (3) mit einer Gesamtquerschnittsfläche zwischen 0,1 m² und 1m² ausgebildet ist.

8. Schneedichtemessgerät (B) nach einem der vorhergehenden Ansprüche, wobei die Geräteabdeckplatte (3) beweglich und/oder austauschbar an dem kastenförmigen Schneedichtemessgerät (B) montiert ist.

9. Verfahren zum Messen von Schneedichten mit Nahinfrarotstrahlung und einem Schneedichtemessgerät (B) nach einem der vorhergehenden Ansprüche,
**umfassend die Schritte:**
- Platzieren eines zumindest teilweise geöffneten kastenförmigen Schneedichtemessgerätes (B) auf der Oberfläche einer Schneefläche- Abbilden der Oberfläche durch Beleuchtung mit Nahinfrarotstrahlung durch die mindestens eine Beleuchtungseinrichtung (4) und Aufzeichnen von digitalen Bildern durch den mindestens einen Detektor (8), gesteuert durch die Recheneinheit (CU),- das kastenförmige Schneedichtemessgerät (B) teilweise mit seiner Instrumentendeckplatte (3) abdeckt, wobei die Vielzahl der Öffnungen (5) weggelassen wird, und anschließend - Abbildung derselben Oberfläche der Schneeseite (S) durch die Öffnungen (5) in der Instrumentendeckplatte (3) und Aufzeichnung von digitalen Bildern durch den mindestens einen Detektor (8), gesteuert durch die Recheneinheit (CU) und später- Auswertung durch eine Software und Umrechnung in die Schneedichte Profile, die durch Kombination der bekannten spezifischen Oberfläche mit der Reflexion einer teilweise verschatteten Oberfläche bestimmt werden.

10. Verfahren zum Messen von Schneedichten nach Anspruch 9, wobei vor und nach jeder Bildsequenz ein dunkles digitales Bild zur Eliminierung störender externer Lichtquellen aufgenommen wird.

## Revendications

1. Instrument de mesure de la densité de la neige (B), comprenant au moins un dispositif d'éclairage (4) générant un faisceau incident (6), au moins un détecteur de lumière (8), basé sur des capteurs CCD ou CMOS en silicium, mesurant la lumière réfléchie et une unité de calcul de commande (CU), dans laquelle l'instrument de mesure de la densité de la neige (B) est formé en forme de boîte, le ou les dispositifs d'éclairage (4) et le au moins un détecteur de lumière (8) sont relié à une plaque de base de l'instrument de mesure de la densité de la neige en forme de boîte (B) et disposé à l'intérieur de l'instrument de mesure de la densité de la neige (B), qui est recouvert d'une plaque de recouvrement d'instrument (3) faisant face à un côté de neige (S) et recouvrant l'instrument de mesure de la densité de la neige en forme de boîte (B), tandis que à partir de particules de glace (1), le rayonnement réfléchi peut être mesuré dans le ou les détecteurs de lumière (8) avec des images numériques contrôlées et traitées par le unité de calcul (CU) à l'intérieur de l'instrument de mesure de la densité de la neige (B) d'une manière non invasive, dans laquelle les images numériques sont évaluées par un logiciel et converties en profils de densité,
**caractérisée en ce qu**
'une multiplicité d'ouvertures (5) sous forme de fentes, en particulier parallèles les unes aux autres, sont laissées de côté dans la plaque de recouvrement de l'instrument (3), les fentes ayant des largeurs de fente différentes (L), permettant le passage du rayonnement proche infrarouge incident (6) rayonné par le ou les dispositifs d'éclairage (4) dans une gamme de longueurs d'onde comprise entre 800 nm et 1500 nm à travers la multiplicité des ouvertures (5) vers le côté neige (S).

2. Instrument de mesure de la densité de la neige (B) selon la revendication 1, dans lequel la multiplicité des ouvertures (5) a des sections transversales rectangulaires avec des largeurs de fente (I) comprises entre 0,5 cm et 5 cm.

3. Instrument de mesure de la densité de la neige (B) selon la revendication 2, dans lequel les fentes voisines (5, 5', 5", 5‴) n'interfèrent pas entre elles à des distances d'au moins environ deux fois la largeur de la fente (I, l', I", I‴) l'une de l'autre.

4. Instrument de mesure de la masse volumique de la neige (B) selon l'une des revendications précédentes, dans lequel la multiplicité des ouvertures (5) s'étend sur plus de la moitié de la longueur de la plaque de recouvrement de l'instrument (3), en particulier sur environ 90 % de la longueur de la plaque de recouvrement de l'instrument (3).

5. Instrument de mesure de la densité de la neige (B) selon l'une des revendications précédentes, dans lequel des détecteurs supplémentaires (8') sont placés dans des évidements de la plaque de recouvrement de l'instrument (3), faisant face au côté neige (S) et connectés électriquement, de préférence également sans fil ou par câblage à l'unité de calcul (CU).

6. Instrument de mesure de la densité de la neige (B) selon l'une des revendications précédentes, dans lequel une multiplicité de dispositifs d'éclairage (4) et une multiplicité de détecteurs (8) sont fixés à l'intérieur de l'instrument de mesure de la neige (B) au niveau de la plaque de base, à une distance fixe (d) entre les détecteurs (8) et les surfaces de la multiplicité des ouvertures (5).

7. Instrument de mesure de la densité de la neige (B) selon l'une des revendications précédentes, dans lequel l'instrument de mesure de la densité de la neige en forme de boîte (B) ou la plaque de recouvrement de l'instrument (3) est conçu avec une section transversale totale comprise entre 0,1 m² et 1 m2.

8. Instrument de mesure de la densité de neige (B) selon l'une des revendications précédentes, dans lequel la plaque de recouvrement de l'instrument (3) est mobile et/ou montée de manière interchangeable sur l'instrument de mesure de la densité de la neige en forme de boîte (B).

9. Procédé de mesure des densités de neige par rayonnement proche infrarouge et instrument de mesure de la densité de la neige (B) selon l'une des revendications précédentes, **comprenant les étapes consistant à** :
- placer un instrument de mesure de la densité de la neige (B) en forme de boîte au moins partiellement ouvert sur la surface d'une zone enneigée- imager la surface par éclairage avec un rayonnement proche infrarouge par le ou les dispositifs d'éclairage (4) et enregistrer des images numériques par le ou les détecteurs (8) commandés par l'unité de calcul (UC),-recouvrant partiellement l'instrument de mesure de la densité de neige en forme de boîte (B) avec sa plaque de recouvrement d'instrument (3) avec la multiplicité des ouvertures (5) laissées de côté et ultérieure - l'imagerie de la même surface de côté de neige (S) à travers les ouvertures (5) de la plaque de recouvrement de l'instrument (3) et l'enregistrement d'images numériques par le ou les détecteurs (8) commandés par l'unité de calcul (UC) et plus tard - l'évaluation par un logiciel et la conversion en densité de neige Profils déterminés en combinant la surface spécifique connue avec la réflexion d'une surface partiellement ombrée.

10. Procédé de mesure des densités de neige selon la revendication 9, dans lequel une image numérique sombre sera prise avant et après chaque séquence d'imagerie pour l'élimination des sources lumineuses externes interférentes.
